Europäisches Patentamt

European Patent Office

Office européen des brevets

(11) Publication number: **0 469 661 A1**

## EUROPEAN PATENT APPLICATION

(21) Application number: **91201833.0**

(22) Date of filing: **12.07.91**

(51) Int. Cl.5: **G01N 21/00, A61K 41/00**

(30) Priority: **01.08.90 IT 2116790**

(43) Date of publication of application:
**05.02.92 Bulletin 92/06**

(84) Designated Contracting States:
**DE FR GB IT**

(71) Applicant: **Ciccolo, Enza**
**Via Ripa Ticinese 5**
**Milano(IT)**

(72) Inventor: **Ciccolo, Enza**
**Via Ripa Ticinese 5**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Method for the indentification of frequency and bioenergetic activities in waters and their use.**

(57) Process for identifying bioenergetic and biological frequency activity properties in waters, especially comprising the phases of:
- placing a small quantity of water to be investigated in a container of inert material, transparent to light,
- projecting towards said water a suitable electromagnetic radiation of predetermined wavelength,
- observation by said operator or by anyone present of a variation in intensity of the stationary wave of the pulsation, the presence of such variation indicating the active response to said frequency.

EP 0 469 661 A1

This invention relates to a method of identifying, in a water, the existence of particular frequency properties or bioenergetic and biological activities, and to the use of the waters having such properties.

For many types of waters, from various sources, there has been recognized a particular biological activity or therapeutic effectiveness that differs from one type to another of said waters, and which therefore makes them recommendable for many applications, for example for therapeutic purposes and purposes of ecological equilibrium. Such activity cannot normally be correlated with the chemical composition of the water and the substances present in solution in it, nor with its physico-chemical characteristics, and therefore cannot be singled out in analytical chemical terms or detected by common physical methodologies. The efficacy of such waters, hereinafter termed for brevity "active" waters, in relation to particular types of pathologies, biological changes or the like, has usually been identified solely by empirical means and has been based upon tradition or upon prolonged clinical trials and the like.

This did not, however, make it possible to verify directly, on a small quantity of water under investigation, of unknown or undocumented origin, its possible efficacy or "activity", as it frequently was not possible to have recourse to extensive experimentation, which would have required long periods of time and availability of sufficient quantities of such water.

On the other hand, persons skilled in the art are familiar with the fundamental principles of resonance and of microinformation, elements of the frequency study that characterizes auricular medicine. These principles constitute the basic element of the relevant research, in that as a result of them every aspect of life is considered in its vibratory reality. The starting point is a simple scheme, which attributes a specific frequency to each human biological tissue, which leads to the possibility of knowledge of and investigation into every vegetable or animal biological tissue.

The term "resonance" is to be understood as meaning the physical condition which occurs when two waves of equal amplitude and length encounter each other. With regard to microinformation, this is the technique by which there is supplied, to the frequentially modified tissue, the information of the frequency which induces the correction, for example by means of the cutaneous receptors. Microinformation in reality can be interpreted as a much broader mechanism, inherent in nature; it daily demonstrates its receptivity to cosmic information, by which moreover it is moulded and nourished for the purpose of realizing the biorhythmic ciclicity. It is known that frequency is defined as the vibratory activity inherent in every element. By physics, such vibratory activity proper to each elementary particle is expressed by greater and lesser intensity according to whether substances of an aerial, liquid or solid nature are considered. Such intensity is the resultant of two fundamental parameters: the wavelength and wave amplitude. Therefore a solid body, for example, subjected more to gravitational force, will have vibratory frequencies that are slower than a liquid body, less subject to the same force, measureable in Hertz. Frequency investigation into organisms makes use, however, of the technique known as VAS, by means of which a variation in the stationary sphygmic wave on the radial artery is detected each time a changed frequency approaches the ear, and therefore the energy field of the organism.

In relation to said possibility, it is necessary to carry out a thorough and detailed investigation into the vibratory equilibrium of the various organs and tissues which make up the individual, in such a way as to detect the energy links which run between the various levels, which determine the various passages of the conversion of energy into matter. For this purpose, the use of the hydrofrequency technique is envisaged, which consists of two successive moments:

1) Frequency investigation by means of the resonance test.

2) Energy re-equilibrium therapy by the use in microinformation of the frequencies which can correct the change.

1) Frequency investigation consists of

a) positioning the patient in the north-south (head-feet) direction,

b) isolating his energy field from any external interference including that of the therapist with 27 drops of Acqua 7FL (or definitively active water on all seven frequencies that resonate on the fifth level), placed around his energy field,

c) in bringing towards his energy field, preferably at the height of the ear, because this is the organ specialized for receiving stimuli, frequencies of varying wavelengths, coloured filters, or fabrics, or chemical substances which, by interfering with the corresponding ones of the organism under examination, will become resonant or dissonant. These two characteristics are linked in the

d) VAS: automatic vascular signal, which consists in the variation in the intensity of the stationary wave which can be detected at the height of the medial radial artery.

e) the frequency investigation, once the organism to be analysed has been positioned according to the points described above, consists in an energy check-up, according to the following clinical procedure.

I - N-S orientation

II - frequency isolation

III - activation of the Chakras with the information of 3 drops of "Acqua di luce" with specific resonant frequencies with each chakra (or point of meeting of the various energies positioned along the axial line of the vertabral column).

IV - measurement of the level of change in PAO (1-9) and in the harmonic (1-9); (where PAO represents the conventional abbreviation which associates the energy level of the type of water considered with an identifying number: for example, PAO5 = $H_2O$ with the vibratory intensity at the fifth octave of the physical one).

V - measurement of the change in the elements (AG-earth; BF-water; CE-air; D-fire (which correspond in the basic scheme to the frequencies A = 2.5 Hz, B = 5Hz, C = 10Hz, D = 20Hz, E = 40Hz, f = 80Hz);

VI - measurement of the change in the fundamental energies: polarized, electrical, magnetic 44A-58-B25 (indicated respectively by the numbers Kodak[R] for identification of coloured glasses with the type of frequency: with polarized energy = blue = 44; with electrical energy = green = 58; with magnetic energy = red = B25).

VII - measurement of the adaptation to the seasons and hours of the day (indicated by the respective colours Kodak[R]: winter = 87 = virtually black, h 21-3; spring = 59 = green₃ h 3-9; summer = 26 = magenta, h 9-15; autumn = 78 = violet, h 15-21).

VIII - measurement of the changes in the DNA and RNA and of their bases: adenine, citosine, guanine, timine, uracil.

IX - measurement of the changes in the axes of adaptation: epiphysis, hypophysis, hypothalamus, acth, cortisolo, suprarenal cortico.

Points numbered 1 to 7 are applicable to every biological organism and to the ambient. Points 8 and 9 more specifically concern man.

2) Energy re-equilibrium therapy by means of the resonance test and the technique of microinformation consists: for man

f) positioning, in microinformation, on the skin of the right arm (periphery), of the solar plexus and of the forehead (centre), the frequencies which must be received for removing the change,

g) in illuminating with white light (heine lamp) the filters placed in microinformation, so as to amplify the frequency stimulus conducted by the filter and to make it more suitable for reception.

h) in substituting the action of the microlaser (girl-laser apparatus with monochromatic rays used in the school of Glem di Lione for frequential investigation and therapy) by filters containing waters at various frequencies; these filters, operated by the hand of the therapist in rotary movement, describe elliptical paths around precise localizations of important energy sites of the organism: around the umbilicus, they touch the points of the liver, spleen, left kidney, right ovary, which constitute the coincident basic rhomboidal quadrilateral of the two energy pyramids of earth and water; then around the pharynx they touch the corresponding points which form the rhomboidal quadrilateral of the coincident base of the two energy pyramids of air and fire. The number of these rotations is given by the number of altered levels which emerges from the analysis of the patient, and the direction of the rotation is opposite to that which has generated the pathology. In this way it is desired to give to the solid, liquid, aerial and caloric whole which constitutes the living organism the information of a balanced conformation, that is to say a harmonic between the greater and the lesser, between the right-hand and left-hand elements, as it occurs in the elementary atomic structures.

i) in the administration over 28 days (one lunar cycle) of a mixture of waters prepared in relation to the requirement emerging from the frequential investigation, and therefore containing the frequencies necessary for the alteration of the organism. These waters, administered daily during the fundamental rhythms of the day, lead to the provision of those light frequencies that are suitable for catalysing the absorption of the cosmic frequencies.

The requirement therefore arises for providing a method of identifying the bioenergetic and biological frequential activity or efficacy of the water under investigation, which it shall be possible to execute in short times and on small specimens of said water, thus making it possible to distinguish "active" waters from non-active waters, and which furthermore shall enable different characteristics or possibilities of application to be singled out between various types of "active" waters.

Said results are achieved by a process for the identification of bioenergetic and biological frequential properties in waters, according to the present invention, comprising the phases of placing a small quantity of water under investigation in a container of inert material, transparent to light and preferably vitreous, such as a test tube or the like, or even open water, of projecting towards said water, from an operator present, a coherent electromagnetic radiation of predetermined wavelength within the visible range, and of measuring in the medial position on the radial artery of the operator and/or of other person present, a variation in the intensity of the stationary wave of the pulsation, the presence of said variation indicating the active response of the water ("activity" of the water at said frequency), of repeating the test for several different frequencies within the visible or resonant radiation range. The variation in intensity of the stationary pulsation wave of the subject present at different test frequencies, appropriately selected between seven frequencies uniformly spaced apart within the visible or resonant range, makes it possible to find out at what frequencies said variation occurs, said frequencies being characteristic of the water investigated.

An appropriate apparatus for the emission of a suitable radiation is composed of a laser beam emitter of very low intensity having several selectable frequencies. The presence of the alteration in the stationary wave of the pulsation of the operator, in correspondence with particular frequencies of the incident radiation emitted by the emitter apparatus, can be established on waters of known origin and can be placed in relationship with the existence of bioenergetic and biological frequential "activities" of said waters, already known in advance as a consequence of clinical experiments or the like, statistically analysed, or with knowledge of another type (so as to extract direct correlation data between each type), of water liable to induce alteration in the pulsation if it contains particular frequencies that may be used for pathologies or biological alterations, thus identifying specific fields of application of each.

In contrast, waters that are known to be inert or inactive from the point of view of bioenergetic or biological frequency have not provided, with any incident wavelength, pulsation alterations. On the other hand, waters which have demonstrated the existence of alterations in pulsation of the operator, in the test described above, at one or more frequencies, have been shown, by subsequent clinical experimentation, to be biologically "active" and provided with therapeutic properties.

"Active" waters, which have demonstrated a response to seven different frequencies uniformly spaced apart in the visible or resonant radiation range, can be reproduced by imparting their properties to a new mass of water, previously inactive, by the method forming the subject of Patent Application number 22.929 A/88 of the same Patent Proprietor.

More specifically, the present invention relates to a process for activating, through a chain of successive dilutions, medicinal substances for oral use, dissolved in standard waters with the addition of waters having particular properties which have already been therapeutically tested. The activated drug has given better results from the curative aspect and a reduction in possible harmful effects, compared with its traditional administration.

The invention relates also to a process for acitvating, through a chain of successive dilutions, extractive solutions of medicinal plants in normal water, by means of the additions of "various" waters according to the plant, having special properties already therapeutically tested. A simple herbal remedy (mallow, mint, camomile and others) can take on an increased therapeutic action if a specific resonant water is added to it. An infusion of mallow plus active water in white light, when subjected to the gold salts test, provides active response. The mallow does not absorb the frequency of light but strengthens the response thereof in the test. (Registered trademark).

Further explanations of the invention are provided by the following examples, in which abbreviations of the various waters used in the tests are employed.

EXAMPLE 1:

A solution of ZANTAC$^R$ (a synthetic drug, a tablet of ZANTAC$^R$ 150 in 500 ml of mains water) plus white light water is subjected to the gold salts test (Ansaloni A. Vecchi P., publication "Rassegna Chimica" ("Chemical Review") No. 6, Nov.-Dec. 1986, page 359) without having an active response, the light frequencies are absorbed by the ZANTAC$^R$.

An active response is, in contrast, obtained by subjecting to the gold salts test a solution of ZANTAC$^R$ plus a particular mixture of waters, water ZANTAC$^R$ + white light water ("Acqua a Luce Bianca") or a mixture of waters of various frequencies mixed together to obtain the right-handed resonance to the vibrations of the chemically left-handed ZANTAC$^R$ and of a sample of definitely active water having all the seven frequencies which resonate in the fifth level. The passage through the white light water takes place without loss of frequencies.

The example reported above has demonstrated that only the solution containing the tablet of ZANTAC$^R$ 150 has destroyed the activity of the white light water and has interrupted the chain of successive activations.

EXAMPLE 2:

40 g of alpine yarrow (also known as achillea millefolium) are heated in one litre of water. Before boiling point is reached, the heat is extinguished and the vessel covered and allowed to cool.

The liquid is filtered and 48 drops of PAO2-AG6-44A are added, which represents the right-handed energy formula of the yarrow. The infusion is stored in the refrigerator and is warmed each time before being drunk. The dose is one-half of a table tumbler, away from mealtimes, three times per day. The infusion is used in colitis, enterocolitis, cystitis, prostatis, but especially for regulating menstrual flow.

EXAMPLE 3:

A mixture is prepared with the following ingredients:

| | |
|---|---|
| Pine buds | g 100 No.1 (PAO2-AG5-44A) |
| Eucalyptus leaves | g 100 No.2 (PAO2-D5-B25) |
| Mint leaves | |
| Peppermint | g 50 No.3 (PAO2-7fr.D6-44A) |
| Lime-tree flowers | g 40 No.4 (PAO2-BF6-58-B25) |
| Serpillo thyme | g 40 (PAO3-CE3-58) |

Each evening, a dose of 3-4 teaspoons in 1/4 litres of water is taken: this is heated and just before boiling the saucepan is removed from the flame and the drops of PAO are added, a funnel is fitted as lid and inhalation is commenced and continued for 10 minutes. Afterwards, the liquid is poured off and one half is drunk hot (in the evening) and the other half is drunk in the morning on an empty stomach.

Using 46 drops of PAO (Nos. 1-2-3-4) and 18 drops of PAO3, a soothing effect of the respiratory passages is obtained (in rhinitis).

EXAMPLE 4:

The ingredients indicated below are placed in one litre of water:

| | |
|---|---|
| Alpine yarrow (achillea millefolium): | g 10 (No.1) PAO2-AG6-44A |
| Leaves of orsina grape: | g 10 (No.2) PAO2-BF6-58-B25 |
| Parsley (seeds): | g 10 (No.3) PAO2-D6-58-B25 |
| Birch leaves: | g 10 (No.4) PAO3-CE6-58-B25 |

The liquid is boiled for at least 5 minutes, is poured off and 12 droplets of water of Nos. 1-2-3-4 are added, in that order. At a dose of two cupfuls per day, preferably on an empty stomach, for one month, this is used for treating gallstones.

EXAMPLE 5:

In the treatment of epilepsy, two simultaneous reliefs are used, prepared as in the following example:
Tisane 1 = half a litre of water:
20 g of green sage,
20 g of green rosemary,
well washed and chopped fine. This is heated and when it is just about to boil the flame is extinguished and there are added:
3 drops of 7F.L.     9 drops of PAO2-CE-58-B25
3 drops of 7F.MT.    or more
3 drops of 7F.MJ.    9 drops of PAO2-CE-44A

Tisane 2 = one litre of water:

30 g of oak mistletoe.

The liquid is heated, and the flame extinguished just before it boils and then there are added:

8 drops of 7F.MT4     or 24 drops of PAO4-BF2-44A

the mixture is covered and is allowed to cool and is filtered.

In therapeutic doses suitable for paediatric applications, the preparation is used in the treatment of epilepsy in children.

From these example, the importance of the invention is evident for its applications for any pathology. In the frequential investigation and therapy, the quiet attention of the patient enables the remote or near causes of his state of alteration to be decoded from his vibratory language. This altered frequency is responsible for all the disequilibriums which, from the plane in which it shows itself, form in the underlying planes, that is to say it is responsible for all the innumerable aspects of pathology as far as the chemico-physical aspect.

In the 28 days which follow the re-equilibrium, the taking of specific resonant waters catalyses, in the organism, the possibility of re-establishing order in the various altered weft planes; in fact, the introduction of these active waters stimulates, in the organism, the absorption of those correct frequencies which the atmosphere daily and cyclically supplies to us and which our waters frequently cannot any longer absorb.

## Claims

1.  Method for the identification of bioenergetic and biological frequential activity properties in particular waters, characterized by the fact that it comprises the phases of
    - placing a small quantity of water under examination in a container of inert material, transparent to light, preferably vitreous material, such as a test tube or the like, or in freely exposed water,
    - projecting towards said water a suitable electromagnetic radiation of predetermined wavelength, within the visible or resonant range, and
    - measurement, by the operator himself or by some person present, of a variation in the intensity of the stationary wave of the pulsation, the presence of said variation indicating the active response of the water to said frequency,
    - of repeating the test for several different frequencies within the visible or resonant radiation range.

2.  Process for the identification of biological activities in waters according to Claim 1, characterized by the fact that seven different wavelengths are explored, uniformly spaced within the range of visible radiation or resonant with them, and resonating with different types of energy (electrical, magnetic or polarized) and with various types of pathology.

3.  Process for identification according to Claim 1, characterized by the fact that a laser apparatus of very low intensity is used, adapted for emitting several selectable frequencies for creating a retroreaction ring which can be detected at the pulse (VAS) and for successively cancelling out a parasitic frequency at the auricular reflexology points.

4.  Process for activating, through a chain of successive dilutions, medicinal substances for oral use, dissolved in normal water activated with water having particular properties which have already been therapeutically tested.

5.  Process for activating, through a chain of successive dilutions, solutions extracted from medicinal plants in standard water, by additions of various waters resonating according to the plant and having particular properties that have already been therapeutically tested.

6.  Pharmaceutical compositions activated in accordance with Claim 4, through a chain of successive dilutions.

7.  Extractive solutions of medicinal plants activated in accordance with Claim 5, through a chain of successive dilutions.

8.  Use of the compositions according to Claim 6 for an optimization from the therapeutic aspect and reduction in possible harmful effects of the medicinal substances to which particular waters have been added.

9. Use of the extractive solutions according to Claim 7 for utilizing medicinal plants activated in specific therapeutic treatments.

European Patent
Office

**EUROPEAN SEARCH REPORT**

Application Number

EP 91 20 1833

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | BIOSIS PREVIEWS DATABASE BIOSIS, Philadelphia, PA, US L.E. BADGLEY:"A new method for identifying therapeutically effective homeopathic remedies and acupuncture points" abstract no. 79106692 & Am. J. Acupunct., vol. 13, no. 1, 51-56, 1985 * abstract * | 1-3 | G01N21/00 A61K41/00 |
| Y | * idem * | 4-9 | |
| Y | WO-A-8909049 (W.W. FISCHMAN) * the whole document * | 4-9 | |
| A | DE-A-2842691 (K. THEURER) * the whole document * | 1-3 | |
| A | FR-A-2634381 (J.-B. J. C. MOREZ) * the whole document * | 1, 2, 4 | |
| A | CHEMICAL ABSTRACTS, vol. 84, no. 8, 23 Feb 1976 Columbus, Ohio, US L. BARDET ET AL: "Homeopathic dilutions studied by the Raman-laser effect. I. Effect of the extent of dilution" page 392, left-hand column, ref. no. 49779j & Trav. Soc. Pharm. Montpellier, vol. 35, no. 3, 283-296, 1975 * abstract * | 1, 3, 4, 5 | TECHNICAL FIELDS SEARCHED (Int. Cl.5 ) G01N A61K |
| A | GB-A-1432729 (R. DANNEMANN) * the whole document * | 1 | |
| A | MEDLINE DATABASE US National Library of Medicine, Bethseda, MD, US W. MIEHLE: "Umstrittene und sogennante ausserschulische Therapienansätze" abstract no. 87236881 & Z. Rheumatol., vol. 46, no. 1, 1-12, 1987 * abstract * | | |

The present search report has been drawn up for all claims

| Place of search | Date of completion of the search | Examiner |
|---|---|---|
| BERLIN | 12 NOVEMBER 1991 | JOHNSON, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

EUROPEAN SEARCH REPORT

Application Number

EP    91 20 1833
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| | ----- | | |

TECHNICAL FIELDS
SEARCHED (Int. Cl.5 )

The present search report has been drawn up for all claims

| Place of search | Date of completion of the search | Examiner |
|---|---|---|
| BERLIN | 12 NOVEMBER 1991 | JOHNSON, K |

EPO FORM 1503 03.82 (P0401)